# EUROPEAN PATENT SPECIFICATION

(11) **EP 3 464 048 B1**
(45) Date of publication and mention of the grant of the patent: **12.02.2025**
(21) Application number: 17733018.0
(22) Date of filing: 23.05.2017
(51) Int. Cl.: B63B 17/00, B63B 17/06, B63B 29/16, B63B 35/30

(54) **A WASTE DISCHARGE MONITOR AND MONITORING SYSTEM**
ABFALLENTSORGUNGSÜBERWACHUNG UND ÜBERWACHUNGSSYSTEM
SYSTÈME DE SURVEILLANCE ET CONTRÔLEUR D'ÉVACUATION DE DÉCHETS

(30) Priority: 23.05.2016 GB 201609020
(43) Date of publication of application: 10.04.2019
(73) Proprietor: Creative Marine Solutions Ltd, UK, Bridport, Dorset DT6 6EJ (GB)
(72) Inventor: DAY, Owen, Bridport Dorset DT6 6EJ (GB)
(74) Representative: Walker, Neville Daniel Alan
(86) International application number: PCT/IB2017/053027
(87) International publication number: WO 2017/203424

(56) References cited:
- CN-A- 104 648 623
- CN-A- 104 648 623
- DE-A1- 102005 022 870
- DE-A1- 102005 022 870
- US-A- 4 886 607

## Description

### Field of the Invention

The present invention relates to a waste discharge monitor and monitoring system.

### Background

It is common for waste to be collected and stored on a vessel such as a sailing boat or ship when at sea, a vehicle such as caravan or motor home or an aircraft. Usually such waste is held until a decision is taken to discharge the waste from a waste storage tank. Usually consideration is given as to where such tanks are to be emptied if it is not possible to expel the waste directly in a waste system such as a sewer or sewage treatment facility.

Certain areas or regions have sensitive habitats or delicate environments that can be adversely affected by the discharge of waste, especially sewage. In particular discharge of such waste can be damaging to habitats, animals, plants as well as presenting a health hazard to people.

For these reasons it is often the responsibility of the owner or commander of the vessel, vehicle or aircraft to select an area where safe discharge of waste can be made. However, the commander of the vessel, vehicle or aircraft may not always be aware of potential environmental impact of discharging in certain areas or even local laws that prohibit such discharge.

Therefore there is a risk that a discharge of waste is made in an unsuitable region leading to destruction or damage of a habitat or health problems to users of the water or legal action being taken against the owner or commander of an offending vehicle, vessel, or aircraft.

In recent years there has been a rapid increase in travel by land, air, and sea. Increased recreational boating (for example yacht charters) has raised concerns about pollution from these vessels, leading to the development of increasingly stringent legislation for the prevention of coastal pollution in many jurisdictions and in particular in the UK. The regulations are often based on zones (e.g. 3 miles offshore is acceptable in many countries). However, at present there is no way to enforce the regulations effectively and therefore there is a need to develop suitable technologies that can overcome this problem.

In addition many existing jurisdictions regulations do not take into account numerous other factors, such as complexities or sensitivities of an ecosystem or seasonal variations in local habitats which, at certain times of the year, may be very significant.

Furthermore vessels, vehicles or aircraft travelling large distances often transit through multiple jurisdictions each of which may have different environmental factors and regulations. The commander of such vessels is unlikely to be aware of all suitable/permitted sites for waste discharge and all relevant local regulations.

Therefore it is common for waste to be discharged in unsuitable locations, often due to lack of local knowledge, resulting in pollution risks and punitive fines.

The present invention has been developed to overcome the aforementioned problems.

An aim of the invention is to enable the commander of a vessel to ensure that waste is only discharged in permitted regions.

### Prior Art

Chinese utility model CN 203397474U (Deng) discloses a real-time monitoring terminal for monitoring pollution discharge of inland vessels.

Korean patent KR 101238711B1 (Lee) discloses an optimum control system for a discharge measurement boat for use in high precision discharge measurement in streams.

US Patent Application US 2011018011 A1 (Boren) discloses a distributed control system for vacuum sewer system.

US Patent US 8834723B1 (Richerand) discloses monitors in tandem with interface probes reading in multiple locations and divert valves which are operated by the readings of the interface probes.

Wikipedia - https://en.wikipedia.org/wiki/Oil_discharge_monitoring_equipment discloses Oil Discharge Monitoring Equipment (ODME) which measures oil content in the ballast and slop water to measure conformance with regulations.

VAF Instruments discloses Oilcon (RTM) Mark 6, an oil discharge monitoring and control system which uses scatter light to analyse liquid content.

German Patent Application DE 10 2005022870A1 (Scholz) discloses a detection and control system for discharging from a ship.

Chinese Patent Application CN 104648623A (Beijing Efinder Technology Co Ltd) discloses an automatic valve for marine sewage discharge.

An object of the invention is to provide an improved waste discharge monitor and monitoring system.

### Summary of the Invention

According to a first aspect of the present invention as claimed in claim 1 a waste discharge monitoring system comprises a waste discharge monitor with a tamper resistant means comprising: a valve, a power supply, a flow meter adapted to detect and measure waste passing through the valve, a sensor and a recorder which is adapted to receive a GPS signal and to record the GPS coordinates upon receipt of a signal from the sensor, the sensor is arranged to detect opening/closing of the valve and to transmit a signal to the recorder to log when the valve is opened/closed, the recorder is adapted to record the signal indicating opening/closing of the valve, so that the GPS coordinates of the vessel, in which the waste discharge monitor is installed, corresponding to where the valve is opened/closed, are also wherein the recorder includes a memory means adapted to record and store collected including the GPS coordinates of the vessel and the time and date when the valve is open/closed and the amount (volume) of waste that is discharged through the valve as detected and measured by the flow meter.

According to a second aspect of the present invention as claimed in claim 2 a waste discharge monitoring system comprises a waste discharge monitor with a tamper resistant means comprising: a valve, a power supply, a flow meter adapted to detect and measure waste passing through the valve, a sensor and a recorder which is adapted to receive GPS coordinates and to record the GPS coordinates upon receipt of the signal from the sensor, the sensor is arranged to detect opening/closing of the valve and to transmit a signal to the recorder to log when the valve is opened/closed, the recorder is adapted to receive GPS coordinates, provided by equipment on a vessel in which the waste discharge monitor is installed, and the recorder is adapted to record the signal indicating opening/closing of the valve, so that the GPS coordinates of the vessel, corresponding to where the valve is opened/closed, are recorded; wherein the recorder includes a memory means to record and store collected data including the GPS coordinates of the vessel and the time and date when the valve is open/closed and the amount (volume) of waste that is discharged through the valve as detected and measured by the flow meter.

In this way opening and/or closing of the valve is logged by the recorder so as to evidence if the valve has opened or closed and thereby record when a discharge of waste is made through the valve.

The waste discharge monitor includes a flow meter to detect and measure waste passing through the valve. This provides a mechanism to ensure that accidental opening of the valve, when a holding tank is empty, does not register as a logged waste discharge.

The flow meter also measures the volume of a discharge. Typically, the flow meter is provided at an exit of the holding tank or at a location or region from where waste leaves or is removed from the vessel, vehicle, or aircraft.

Although claimed in conjunction with a vessel the waste discharge monitor may be provided on any vehicle that is capable of moving locations and includes: sea going craft such as boats, ships, hovercraft; land based vehicles such as caravans, motorhomes, trains, buses; and aeroplanes and helicopters.

It is appreciated that two or more discharge monitors may be provided on each vessel. A discharge monitor may be provided in association with each waste holding tank, at each exit from each holding tank, or two or more discharge monitors may be arranged at an exit of a holding tank.

The recorder records the time when the valve is opened, so that the time at which waste is discharged is recorded; and the time when the valve is closed, so that the duration the valve is opened is also be recorded.

Information, stored as data, may optionally be cross-referenced against other data, such as data that is obtained independently of the monitor, so as to enable further data to be derived.

For example, the GPS location at a logged time may be crossed checked with a second, independent GPS system, thereby enabling an authorised user of the data from the monitor to verify the location of a discharge of waste. Advantageously this allows the system to be used to advise users of safe discharge areas in order to protect delicate environments such as coral reefs. The tamper resistant means prevents the discharge of waste from being concealed, or going unrecorded, thus enabling legal and illegal discharges of waste to be identified.

The recorder includes a memory means so as to record and store data that is collected. The memory means may comprise a removable memory card. The data from the memory may be accessible wirelessly, for example using capacitive or inductive coupling. Such a wireless removal arrangement permits a memory to be read by a reader from a location outside of the vessel or craft as described below.

The electronic memory means may be read only memory (ROM) or erasable programmable read only memory (EPROM).

The memory means can store: Universal time (GMT), date, GPS coordinates of the vessel/craft, time signals that are transmitted to and from the valve so as to record when the valve is open and closed, the amount (volume) of discharged waste and the nature of discharged waste. In this way waste discharge can be monitored and this data can be used to assist with pollution analysis.

Data may also be transmitted to land-based receivers and/or onto a 'cloud-based' database to allow local authorities to monitor the discharges of vessels in their jurisdiction.

Ideally an on-board, long life battery is provided on the monitor so that the monitor does not require a permanent hard wired power supply. The battery may be rechargeable so that connection to a power supply enables the battery to be recharged. In some embodiments the monitor or monitoring system may include a means for indicating when a battery level is low and/or if a power supply is lost.

The monitoring system may include a back-up power supply, such as a secondary battery.

In some situations, a service or maintenance plan may be provided to ensure regular checks and replacement of parts, such as the battery(ies), are carried out to ensure constant monitoring can be achieved. It is appreciated that such maintenance checks may become part of an industry standard, such as sea check for insurance and regulatory purposes, or as part of a requirement to maintain a particular standard or certification. For example, the requirement of a waste discharge monitor on vessels of a certain type or size may be a requirement to berth in marinas accredited to the so-called 'Gold Anchor Award Scheme' - http://www.which-marina.com/GoldAnchors.asp.

In some embodiments the recorder is located remote from the valve. In this configuration the recorder may be positioned where it can be easily viewed or accessed so as to permit data collected to be readily extracted. Furthermore, as the valve is typically arranged at a fluid outlet, it may be preferable, for accessibility reasons, for the recorder to be fitted in a cockpit of a vessel or on the bridge of a vessel.

The valve and recorder may communicate via a hardwired connection or via wireless communication. Ideally the valve and recorder are located close to one another (or in the same housing) so that a wire (or optical fibre) can be connected between them. On vessels where it may be difficult or impractical to introduce a wired system, for example if retrofitting the device to an existing vessel, a wireless communication system may be used.

The monitor has a tamper resistant means so as ensure data captured by the monitor is intrinsically safe and cannot be tampered with in any way. Preferably the tamper resistant means prevents data being deleted or amended by a third party thereby ensuring accuracy and integrity of collected and recorded data.

The monitor also includes a tamper evident means. For example, the recorder may be located within a housing that is closed by a seal or has a covert sensing means. Disruption of the seal indicates that the recorder has been tampered with and that recorded data may not be trustworthy.

The tamper resistant or tamper evident means may also provide a means for detecting a disconnection of a power supply, disruption of a signal or nondetection of a signal. For example if a cable was cut or if a sensor removed or a signal transmission is blocked.

In some embodiments the valve and recorder may be in regular, automated communication one with another. This is achieved for example by transmission and receipt of a pulsed or encoded signal between the sensor, associated with the valve, and the recorder so as to confirm that the monitor is in an operational state. Failure to detect a regular pulse indicates a fault and a detected fault may trigger an alert, such as an alarm or light.

Optionally the waste discharge monitor may also have a test function wherein a pulse is sent prior to waste discharge to check the monitor is operational. This test function may be an automatic step that occurs before the valve can be opened and permission to open the valve is only granted upon receipt of a recognised permission signal before an authorisation signal is transmitted to enable the valve to be opened.

In some embodiments the recorder may include a continuity sensor that triggers an alert if communication between the recorder and valve is disrupted. For example, if a signal from the sensor is interrupted or not transmitted by the sensor or received by the recorder an alert may be triggered. The alert may trigger if for example a wire is broken or damaged (deliberately or by accident) or if a wireless signal is blocked. This alert serves as an indicator to a fault in the monitor and/or waste discharge system as well as a possible malicious attack on the system. Preferably an alert is logged by the same or a back-up recorder.

The recorder is adapted to receive and record a GPS signal. When combined with the signal from the sensor it is possible to determine the location of the valve, and thereby the vessel, at the time when the valve is opened and closed.

Recording of the GPS signal is activated upon opening of the valve so that activation of the sensor causes transmission of a signal to the recorder of both valve status and GPS signal.

Optionally the monitor may also transmit a combined GPS and valve status signal to a remote location, optionally via a satellite link or other wireless means, (such as via radio frequency (RF) signals, short range or very high frequency (VHF), **Bluetooth** (RTM), infra-red (IR) communication, telecommunication networks or Wi-Fi) in order that a remote logging station can record all discharges of waste whilst a vehicle is moving across the land, a vessel is at sea or an aircraft is flying through the air.

The transmission of signals from the monitor to the recorder may be triggered by a manual operated switch or an automated switch. In this way, the opening of the valve may be constantly monitored, for example by an authority such as a council, coastguard, environmental, health or other authority, so as to monitor waste discharges form vessels within their jurisdiction or region of interest.

Thus the waste discharge monitor provides a means of policing waste discharge; and enables waste discharge data to be recorded and analysed so that action can be taken to reduce and ideally prevent illegal discharges which may have detrimental environmental or health implications. Such data may also be useful for disease control and monitoring of the transmission and spread of disease.

Typically the waste discharge monitor is for recording the discharge of "black water" and "grey water" at sea and the data may be used in the analysis of such discharges and their long-term effects.

Preferably the waste discharge monitor and monitoring system are provided in the form of a valve that is suitable for fitting or retro-fitting to a waste outlet of a sea going vessel or craft so as to record discharge of waste from its waste holding tank. Transmitted data recorded and logged by the recorder can thereby enable illegal discharging to be covertly detected and the offending vessel to be identified in real time, by way of an identity signal corresponding to the vessel that is transmitted with the valve open time data and the GPS data.

Preferably the waste discharge monitor and monitoring system is integrated with a standard waste system of a vessel, vehicle or aircraft such that the valve is fitted to an existing outlet that is fed by a holding tank. In this way the waste discharge monitoring system is discreet and does not require expensive or intrusive modification of existing waste storage system.

It is appreciated that the waste discharge monitor and monitoring system may also be used in any waste holding systems.

In preferred embodiments the is compared with geographic data in order to identify zones where waste discharge is permitted. In this way regulations on where waste can be discharged may be monitored and updated.

Typically the waste discharge monitoring system may be modified in order to receive a GPS signal provided by existing equipment on the vessel, vehicle or aircraft so as to avoid the requirement for a separate GPS system to be installed.

In some embodiments location data relating to opening of the valve may be recorded by the recorder and transferred to a remote database for analysis after completing a passage; or this may be done by way of a radio link whilst a vessel is still in transit.

Optionally an indicating mark may be provided at or near to the recorder on the vehicle, vessel or aircraft so as to direct a user to where to provide an electronic device in order to upload data wirelessly to the remote electronic device. For example a distinctive marker may be provided on an external surface of the hull of a vessel, adjacent a monitor so that for example, when the vessel is moored alongside a berth data can be extracted without any requirement to board the vessel. The marker provides an indicator of the position of an output device that transmits data recorded and stored in the memory, for example where the memory is remote from the valve.

By monitoring discharge data in this way it is possible to identify illegal discharges and therefore take appropriate action against perpetrators in order to reduce pollution impacts on the environment.

The waste discharge monitoring system enables waste discharge to be monitored, controlled and recorded in order to reduce pollution in coastal waters, marine protected areas, and ecologically important areas (e.g. offshore coral reefs or breeding grounds), and provide a verifiable record of what waste has been dumped, where and when.

Monitoring such data may also permit illegal pollution to be more effectively policed to ensure preventative action against perpetrators is taken.

Advantageously the system reduces risks to human health from sewage and other waste, particularly in, or close, to certain environments such as rivers, lakes, coastal waters, and so reduces the environmental impacts of discharges to fragile ecosystems, such as protected flora and fauna or coral reefs.

Wireless signals used to communicate between the sensor to the remote recorder may include, but are not limited to, short range radio frequency (RF) signals, **Bluetooth** (RTM), telecommunication networks, Wi-Fi, satellite communication channels or infrared communication (IR).

Wireless communication avoids the requirement to hardwire components together and therefore can make fitting of the components easier and reduce the need for the vessel, vehicle or aircraft to be modified extensively in any way to include the valve and system.

In some other embodiments the valve and recorder may each have transmitters and recorders so as to permit two-way transmission and receipt of signals. This permits signals to be sent to the valve, for example in order to command the valve to unlock, or open the valve. However, operation of the valve between open and closed positions is typically controlled manually by a user.

Alternatively the valve is automatic such that a signal sent to the valve enables automatic opening, therefore negating requirement of a user to manually operate the valve. For example the valve may have a servo device that is activated on receipt of a command signal in order to open or close the valve. Upon opening of the valve a signal is also sent to the recorder so as to log time and/or location of valve opening.

In some embodiments the recorder may be connected to, or integrated with, a navigation means such as satellite navigation, a chart plotter and/or RADAR so as to provide geographic data that can be analysed with recorded data.

In a preferred embodiment the recorder is located at or near to the steering position. Alternatively the recorder may be a remote device such as a smart phone, laptop or tablet that is capable of communication with the valve. In some preferred embodiments the waste discharge monitoring system includes an indicating means to advise a user when they are in a permitted waste discharge zone or in a prohibited discharge zone.

For example the GPS location of a vessel may be compared against spatial files, such as charts, in order to establish zones where the discharge of waste from holding tanks is either legal or illegal.

Typically the system includes a processor to permit this comparison to be carried out. Legal and illegal discharge zones may be indicated by an alert such as a light or alarm.

For example the system may include an alert, such as a visual or audible alert that is activated when a vessel or craft is in a location that waste discharge is permitted. This alert may be used a prompt for a user to manually activate the valve to open so that waste is discharged.

Preferably when the vessel or craft is located in an area where discharges are illegal a red light emitting diode (LED) will be displayed on the front panel of the recorder. When the vessel or craft is in an area where waste discharge is permitted (often at least 3 miles from shore), a green LED on the recorder front panel will be illuminated.

Preferably a discharge valve is only able to be opened when the vessel or vehicle is within a permitted zone, as indicated by a GPS authorisation signal. In this way discharge of waste through the valve is only permitted when in a legal discharge zones, such as in environments in which the release of waste will not be detrimental to habitat and/or health.

In some embodiments the recorder may include at least one port for accepting a wired connection, such as Universal Serial Bus port (USB). For example to enable charging, transfer of data and/or update of software. In some embodiments the recorder can communicate wirelessly with a smart phone, laptop or tablet to download updates from a dedicated website and/or application.

In some embodiments the data may be collected, displayed and/or transmitted by means of application software (APP) that is available on a smartphone, tablet or computer.

In some embodiments the waste discharge monitoring system includes an indicator that indicates to a user when the vessel or craft is in an area where waste discharge is illegal or illegal. To do this the location of the vessel or craft is compared against chart information to ascertain if the vessel or craft is in a legal or illegal waste discharge zone or area. In this way a user can be readily advised where waste discharge is permitted.

Typically the indicator may be provided in a cockpit of a vessel or on the bridge of a vessel and/or at a steering position so that a user can easily monitor this information.

The indicator may serve as a prompt for when the valve can be opened and/or must be shut. In some embodiments wherein the valve is automatic the indicator may communicate with the valve such that opening and closing of the valve is only permitted when in certain areas/zones. The indicator may control power to the valve's opening and closing mechanism.

Advantageously the indicator allows the boat owner or crew to confirm if they are located in an area where it is legal or illegal to discharge waste from their holding tanks. Therefore erroneous discharge of waste can be prevented.

For example at least one automatic valve is connected to an outlet, typically from a waste storage tank, and the indicator controls power to the valve so that upon receipt of a signal from the indicator the automatic valve is opened or closed to permit selected discharge of waste from a tank outlet of a sea-going craft or vessel.

In embodiments using automatic valves the valve may be activated automatically once pre-set geographic parameters are met. For example, when the vessel, vehicle or aircraft is in a selected region where waste discharge is permitted the valve is opened. On entry to an area where discharge is not permitted the valve is automatically closed.

In some embodiments the waste discharge monitor and/or monitoring system is operatively coupled an identification system, for example to analyse number, type and proximity of other vehicles, vessel and/or aircraft.

For example the monitor may be connected to an automatic identification system (AIS) on a vessel to analyse number, type and proximity of other vessels in a predetermined range of the vessel and to provide an over-ride signal, which prevents opening of the valve.

In this way if a number of other vessels are in close proximity, or if a large vessel that is likely to discharge large amounts of waste is nearby, discharge of waste can be prevented by the over-ride signal in order to preserve the local environment. Advantageously this can enable 'intelligent' discharges to be made and can stop excessive discharge in a particular area.

It is appreciated that in some embodiments inter-communication between vessels, vehicles or aircraft using the automatic valve, and/or linked communication through a central database may be enabled so that waste discharge data can be monitored and controlled in a local area. By sharing waste discharge information the timing or discharges could be controlled, if for example a number of discharges have occurred over a small period of time this may trigger an override signal to be issued to other vessels in the local area to prevent waste accumulation.

In some embodiments the waste discharge monitor and/or monitoring system is operatively coupled to RADAR means to analyse surrounding objects and to provide an over-ride signal, which prevents opening of the valve. In this way selective discharge of waste is enabled based on data obtained through the RADAR.

Preferably the discharge monitor and/or monitoring system has a sensor to detect amount of waste stored in waste storage tank and to provide an output signal indicative of the stored waste. In this way discharge of waste may only be triggered at certain pre-set levels.

In some embodiments the valve may include a means to record the nature of waste, for example to record if it is toilet waste, sink waste, shower waste, or chemical waste. These factors may be considered as a parameter for where waste can be discharged.

A detector may be provided to detect the nature of the waste by analysing waste content. For example the waste may be scanned to determine content and this data may be used to determine a suitable discharge location.

In some embodiments the monitor and/or the system includes a means for detecting depth of water beneath the craft or vessel or type of ground under a vehicle or aircraft. This data can be used when considering if the vessel, vehicle or aircraft location is in a suitable area for a waste discharge to be made.

For example the waste discharge monitor may include sensors to detect levels of waste within a holding tank, type of waste, discharge zones, distance to next discharge zone or may obtain data relating to this information from other existing systems installed on a vessel, vehicle or aircraft.

Ideally data from all monitors in operation is collated on a database in order to obtain waste discharge data that can be used to assist with identifying suitable discharge locations and to promote habitat maintenance.

The valve and associated system may be fitted at construction of a vessel, vehicle or aircraft. Preferably the valve(s) is/are fitted at an outlet of a waste storage tanks so that all waste must pass through the valve and therefore waste discharge is monitored/recorded. The valve may be supplementary to other valves such as a seacock valve.

In some embodiments the waste discharge monitor of the waste discharge system may include a display that displays information such discharge zones on a chart, to show levels of waste held on the tanks, to show types of waste held, to show distance to next permitted discharge zone etc.

A monitor or monitoring system capable of recording or transmitting discharge data to a database enables relevant agencies to monitor and enforce regulations governing the discharge of waste from vessels/craft. By collating information such as location of the vessel, vehicle or aircraft when the discharge valve was opened, nature of the waste, volume of waste etc., steps can be taken to control pollution.

It is appreciated that it will be possible to open the valve at any time, to include overriding an automatic valve. In this way in an emergency situation where is it necessary to dump waste for safety reasons, such as to reduce vessel weight in high seas so as to improve vessel stability, it will always be possible to open a valve.

The monitor is preferably waterproof or includes waterproof components suitable for a wet environment such as a marine environment. For example the monitor or parts of the monitor may include a waterproof housing and/or seals.

In some embodiments the monitor may be hermetically sealed or include hermitically sealed components, for example the recorder, for improved resilience and security.

Preferred embodiments of the invention will now be described with reference to the Figures in which:

### Brief Description of Figures

Figure 1 shows a waste discharge monitoring system;
Figure 2 shows a system with a valve in an open and closed position;
Figure 3A shows a cross section of a valve;
Figure 3B shows an isometric view of a valve; and
Figure 4 shows a block diagram of a waste discharge monitor.

### Detailed Description of Figures

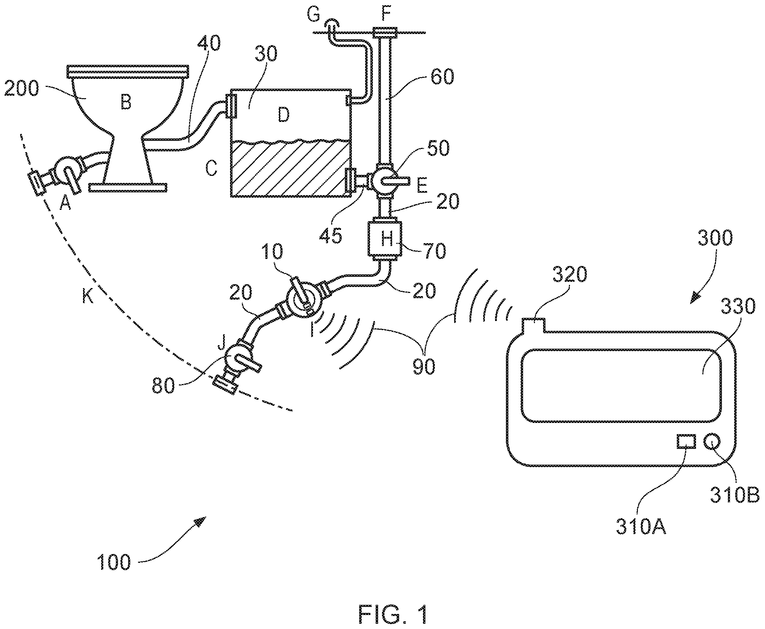

Figure 1 shows a waste discharge monitoring system 100 with a valve 10 fitted on a waste channel 20.

Figure 1 is shown with the following parts:
A. Raw water to head (toilet bowl)
B. Marine head (toilet bowl)
C. Waste pipe - 40
D. Wastewater holding tank - 30
E. Three-way valve (Y valve) - 50
F. Waste pump-out fitting
G. Vent fitting
H. Macerator pump (optional) - 70
I. Discharge Sensor Valve - 10
J. Sea-cock discharge valve - 80
K. Boat hull

The waste discharge monitoring system 100 includes a holding tank 30 that is connected to an inlet 40 and an outlet 45.

The inlet 40 to the holding tank 30 is shown connected to a toilet 200.

The outlet 45 leads to a 3-way valve (Y valve) 50 that connects to a waste pump fitting 60 and the waste channel 20 that provides a flow pathway to exit the vessel. The waste channel 20 has a macerator pump 70, a valve 10 with sensor 11 and a sea-cock discharge valve 80. Waste must pass through all of these components in order to exit the vessel.

The valve 10 includes a hermetically sealed sensor, data recorder and transmitter. The memory in the imbedded data recorder can be accessed by inductive coupling.

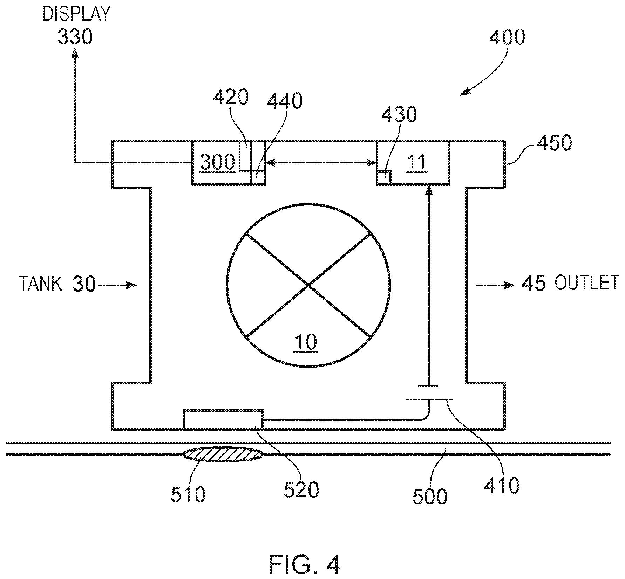

The valve 10 is also connected to and in communication with a remote recorder 300. The valve 10 and recorder 300 from the monitor 150 (see Figure 4). The recorder 300 communicates with the valve 10 so that the recorder can detect when the valve is open or closed.

The recorder is located in a convenient location for visibility, power supply and GPS reception, such as at a steering position or navigation station.

The valve 10 shown in Figure 1 is in wireless communication with the recorder 300. The recorder 300 includes two light indicators, 310A, 310B. The light indicators are lit to indicate when the valve is open, or can be opened (310A - green), or lit to indicate that the valve is closed and cannot be opened (310B - red).

It is appreciated that additional indicators, or combinations of indicators, may be provided. For example such as an audible alert to advise when the valve can be opened or closed. Indicators may also provide information as to whether the vessel is in an area where discharge is permitted or not permitted.

A vessel with two or more outlets, for example leading from separate holding tanks or multiple outlets from a large holding tank could be fitted with at least one automatic valve associated with each corresponding outlet.

Each valve could be connected to the same recorder so as to permit control of the system from a single point.

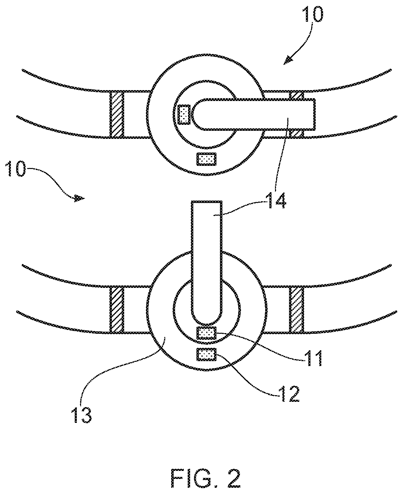

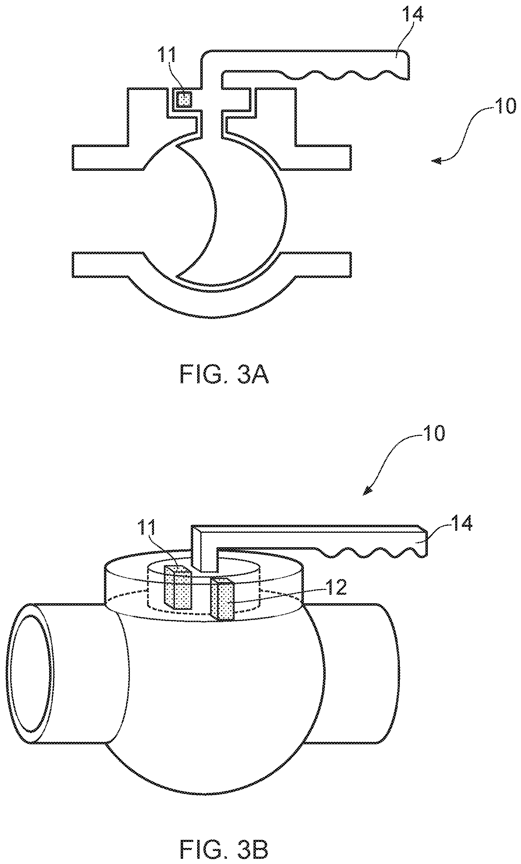

Figures 2, 3A and 3B show a marine-grade ball-valve 10 typically made of PVC which contains a magnet 11, magnetic switch 12, data recorder, a battery and transmitter, located within a collar 13 of the valve. These components are hermetically sealed to prevent damage from water intrusion. The memory in the data recorder can be accessed by inductive coupling.

The magnetic switch 12 is activated when the valve 10 is opened, and the transmitter located in the collar 13 sends a wireless signal (e.g. radio wave coded signal, Bluetooth (RTM)) to a receiver 320 at the remote recorder 300. The event is also recorded in the imbedded data recorder in the body of the valve.

The valve 10 is fitted to a waste outlet 20. A signal 90 (see Figure 1) is sent at regular time intervals from the transmitter in the collar 13 to the receiver 320 at the recorder 300 (for example every hour) until the valve is closed, at which instant signal transmissions 90 from the valve 10 to the recorder 300 are ceased. This ensures a user is aware when the valve 10 is open and can take action to close the valve when discharge of waste is to be ceased/prevented.

In some embodiments of the discharge system with an automatic valve this process may be automated such that opening and closing of the valve occurs automatically depending upon geographic location.

The valve 10 includes a handle 14 to permit manual opening and closing of the valve 10.

The recorder 300 has a display 330 for displaying information.

The recorder 300 has GPS, a processor (not shown), a memory means 420 and a power supply (not shown).

Figure 4 shows a block diagram of components forming the monitor 400 with a valve 10 and a recorder 300. The monitor 400 has power supply 410 in the form of a battery. The battery 410 can be charged, for example by connection with an existing power supply (not shown) and a memory means 420.

The sensor 430 sends a signal upon opening or closing of the valve 10 to the recorder 300. The recorder 300 has a receiver 440 for receiving the signal sent by the sensor 430.

The monitor is enclosed in a casing 450. The monitor 400 is arranged adjacent to hull 500 of a vessel. The hull 500 has a marker 510 to indicate location of the monitor and in particular location of a reader 520.

In some embodiments the action of manually opening or closing the valve may generate an electrical charge to transmit a signal. For example the valve may include a piezoelectric crystal.

The invention has been described by way of examples only and it will be appreciated that variation may be made to the above-mentioned embodiments without departing from the scope of protection as defined by the claims.

## Claims

1. A waste discharge monitoring system (100) comprising a waste discharge monitor (400) with a tamper resistant means comprising: a valve (10), a power supply (410), a flow meter adapted to detect and measure waste passing through the valve, a sensor (11) and a recorder (300) which is adapted to receive a GPS signal and to record the GPS coordinates upon receipt of a signal (90) from the sensor (11), the sensor (11) is arranged to detect opening/closing of the valve (10) and to transmit a signal (90) to the recorder (300) to log when the valve (10) is opened/closed, the recorder (300) is adapted to record the signal (90) indicating opening/closing of the valve, so that the GPS coordinates of the vessel, in which the waste discharge monitor (400) is installed, corresponding to where the valve (10) is opened/closed, are recorded; wherein the recorder (300) includes a memory means (420) adapted record and store collected data including the GPS coordinates of the vessel and the time and date when the valve (10) is open/closed and the amount (volume) of waste that is discharged through the valve (10) as detected and measured by the flow meter.

2. A waste discharge monitoring system (100) comprising a waste discharge monitor (400) with a tamper resistant means comprising: a valve (10), a power supply (410), a flow meter adapted to detect and measure waste passing through the valve, a sensor (11) and a recorder (300) which is adapted to receive GPS coordinates and to record the GPS coordinates upon receipt of the signal from the sensor (11), the sensor (11) is arranged to detect opening/closing of the valve (10) and to transmit a signal (90) to the recorder (300) to log when the valve (10) is opened/closed, the recorder (300) is adapted to receive GPS coordinates, provided by equipment on a vessel in which the waste discharge monitor (400) is installed, and the recorder (300) is adapted to record the signal (90) indicating opening/closing of the valve, so that the GPS coordinates of the vessel, corresponding to where the valve (10) is opened/closed, are recorded; wherein the recorder (300) includes a memory means (420) adapted to record and store collected data including the GPS coordinates of the vessel and the time and date when the valve (10) is open/closed and the amount (volume) of waste that is discharged through the valve (10) as detected and measured by the flow meter.

3. A waste discharge monitoring system (100) according to claim 1 or 2 wherein the recorder (300) is located remotely from the valve (10).

4. A waste discharge monitoring system (100) according to any preceding claim wherein the valve (10) is adapted for wireless communication with the recorder (300) by means of at least one transmitter, which is in communication with the sensor (11), and a receiver (440) which is in communication with the recorder (300).

5. A waste discharge monitoring system (100) according to any preceding claim wherein the GPS coordinates are compared with other data in order to identify zones where waste discharge is permitted and/or prohibited and a means provides a signal indicating whether waste discharge is permitted and/or prohibited at a specific location.

6. A waste discharge monitoring system (100) according to any preceding claim is adapted to be operatively coupled to an automatic identification system AIS to assess the number, type and proximity of other vessels within a predetermined range of the vessel to which the monitor (400) is installed and to provide an over-ride signal which prevents opening of an automatic valve.

7. A waste discharge monitoring system (100) according to any preceding claim is adapted to be operatively coupled to a RADAR means to analyse surrounding objects and to provide an over-ride signal which prevents opening of an automatic valve.

8. A waste discharge monitoring system (100) according to any preceding claim including a sensor means to detect an amount of waste that is stored in a holding tank (30) and to provide an output signal indicative of the amount of stored waste.

9. A waste discharge monitor (100) according to claim 8 including a means, which in use, detects depth of water beneath the vessel to which the waste discharge monitor (400) is fitted.

10. A waste discharge monitoring system (100) according to any preceding claim, including the monitor (400) when arranged adjacent to hull (500) of a vessel, and a transmitter for short range wireless communication from a reader (520) in order to transmit data stored in the recorder (300).

11. A waste discharge monitoring system (100) according to claim 10 wherein the transmitter includes a capacitive coupler.

12. A vessel, including the waste discharge monitoring system (100) according to either claim 10 or 11.

13. A method of monitoring waste discharge using the waste discharge monitoring system (100) according to any preceding claim having the steps of opening/closing the valve and recording and storing collected data including the GPS coordinates of the vessel and the time and date when the valve is open/closed and the amount (volume) of waste that is discharged.

## Patentansprüche

1. Abfallaustragsüberwachungssystem (100), umfassend ein Abfallaustragsüberwachungsgerät (400) mit einem manipulationssicheren Mittel, umfassend: ein Ventil (10), eine Energieversorgung (410), einen Durchflussmesser, der dazu geeignet ist, Abfall, der durch das Ventil hindurchtritt, zu erfassen und zu messen, einen Sensor (11) und ein Aufzeichnungsgerät (300), das dazu geeignet ist, ein GPS-Signal zu empfangen und die GPS-Koordinaten bei Empfang eines Signals (90) von dem Sensor (11) aufzuzeichnen, wobei der Sensor (11) dazu eingerichtet ist, ein Öffnen/Schließen des Ventils (10) zu erfassen und ein Signal (90) an das Aufzeichnungsgerät (300) zu senden, um zu protokollieren, wenn das Ventil (10) geöffnet/geschlossen wird, wobei das Aufzeichnungsgerät (300) dazu geeignet ist, das Signal (90), das das Öffnen/Schließen des Ventils angibt, aufzuzeichnen, so dass die GPS-Koordinaten des Wasserfahrzeugs, in dem das Abfallaustragsüberwachungsgerät (400) installiert ist, entsprechend dem Ort, an dem das Ventil (10) geöffnet/geschlossen wird, aufgezeichnet werden, wobei das Aufzeichnungsgerät (300) ein Speichermittel (420) beinhaltet, das dazu geeignet ist, gesammelte Daten, beinhaltend die GPS-Koordinaten des Wasserfahrzeugs und die Zeit und das Datum, zu der bzw. dem das Ventil (10) geöffnet/geschlossen wird, und die Menge (das Volumen) von Abfall, der durch das Ventil (10) ausgetragen wird, wie durch den Durchflussmesser erfasst und gemessen, aufzuzeichnen und zu speichern.

2. Abfallaustragsüberwachungssystem (100), umfassend ein Abfallaustragsüberwachungsgerät (400) mit einem manipulationssicheren Mittel, umfassend: ein Ventil (10), eine Energieversorgung (410), einen Durchflussmesser, der dazu geeignet ist, Abfall, der durch das Ventil hindurchtritt, zu erfassen und zu messen, einen Sensor (11) und ein Aufzeichnungsgerät (300), das dazu geeignet ist, GPS-Koordinaten zu empfangen und die GPS-Koordinaten bei Empfang des Signals von dem Sensor (11) aufzuzeichnen, wobei der Sensor (11) dazu eingerichtet ist, ein Öffnen/Schließen des Ventils (10) zu erfassen und ein Signal (90) an das Aufzeichnungsgerät (300) zu senden, um zu protokollieren, wenn das Ventil (10) geöffnet/geschlossen wird, wobei das Aufzeichnungsgerät (300) dazu geeignet ist, GPS-Koordinaten zu empfangen, die von einer Ausrüstung auf einem Wasserfahrzeug, in dem das Abfallaustragsüberwachungsgerät (400) installiert ist, aufzuzeichnen, und das Aufzeichnungsgerät (300) dazu geeignet ist, das Signal (90), das das Öffnen/Schließen des Ventils angibt, aufzuzeichnen, so dass die GPS-Koordinaten des Wasserfahrzeugs entsprechend dem Ort, an dem das Ventil (10) geöffnet/geschlossen wird, aufgezeichnet werden, wobei das Aufzeichnungsgerät (300) ein Speichermittel (420) beinhaltet, das dazu geeignet ist, gesammelte Daten, beinhaltend die GPS-Koordinaten des Wasserfahrzeugs und die Zeit und das Datum, zu der bzw. dem das Ventil (10) geöffnet/geschlossen wird, und die Menge (das Volumen) von Abfall, der durch das Ventil (10) ausgetragen wird, wie durch den Durchflussmesser erfasst und gemessen, aufzuzeichnen und zu speichern.

3. Abfallaustragsüberwachungssystem (100) nach Anspruch 1 oder 2, wobei das Aufzeichnungsgerät (300) sich entfernt von dem Ventil (10) befindet.

4. Abfallaustragsüberwachungssystem (100) nach einem vorhergehenden Anspruch, wobei das Ventil (10) zur drahtlosen Kommunikation mit dem Aufzeichnungsgerät (300) mittels mindestens eines Senders geeignet ist, der in Kommunikation mit dem Sensor (11) steht, und eines Empfängers (440), der in Kommunikation mit dem Aufzeichnungsgerät (300) steht.

5. Abfallaustragsüberwachungssystem (100) nach einem vorhergehenden Anspruch, wobei die GPS-Koordinaten mit anderen Daten verglichen werden, um Zonen zu identifizieren, in denen ein Abfallaustrag gestattet und/oder verboten ist, und ein Mittel ein Signal bereitstellt, das angibt, ob ein Abfallaustrag an einer spezifischen Stelle gestattet und/oder verboten ist.

6. Abfallaustragsüberwachungssystem (100) nach einem vorhergehenden Anspruch, das dazu geeignet ist, betriebsfähig an ein automatisches Identifikationssystem AIS gekoppelt zu sein, um auf die Nummer, den Typen und die Nähe anderer Wasserfahrzeuge innerhalb einer vorbestimmten Reichweite des Wasserfahrzeugs, auf dem das Überwachungsgerät (400) installiert ist, zuzugreifen und ein Übersteuerungssignal bereitzustellen, das ein Öffnen eines automatischen Ventils verhindert.

7. Abfallaustragsüberwachungssystem (100) nach einem vorhergehenden Anspruch, das dazu geeignet ist, betriebsfähig an ein RADAR-Mittel gekoppelt zu sein, um umliegende Objekte zu analysieren und ein Übersteuerungssignal bereitzustellen, das ein Öffnen eines automatischen Ventils verhindert.

8. Abfallaustragsüberwachungssystem (100) nach einem vorhergehenden Anspruch, beinhaltend ein Sensormittel, um eine Menge von Abfall, der in einem Haltetank (30) gelagert ist, zu erfassen und ein Ausgabesignal bereitzustellen, das die Menge von gelagertem Abfall angibt.

9. Abfallaustragsüberwachungsgerät (100) nach Anspruch 8, beinhaltend ein Mittel, das im Gebrauch eine Tiefe von Wasser unter dem Wasserfahrzeug, das mit dem Abfallaustragsüberwachungsgerät (400) ausgestattet ist, erfasst.

10. Abfallaustragsüberwachungssystem (100) nach einem vorhergehenden Anspruch, beinhaltend das Überwachungsgerät (400), wenn es benachbart zu einem Rumpf (500) eines Wasserfahrzeugs eingerichtet ist, und einen Sender zur drahtlosen Kurzstreckenkommunikation von einem Lesegerät (520), um Daten, die in dem Aufzeichnungsgerät (300) gespeichert sind, zu senden.

11. Abfallaustragsüberwachungssystem (100) nach Anspruch 10, wobei der Sender einen kapazitiven Koppler beinhaltet.

12. Wasserfahrzeug, beinhaltend das Abfallaustragsüberwachungssystem (100) nach entweder Anspruch 10 oder 11.

13. Verfahren zur Überwachung eines Abfallaustrags unter Verwendung des Abfallaustragsüberwachungssystems (100) nach einem vorhergehenden Anspruch, aufweisend die Schritte eines Öffnens/Schließens des Ventils und eines Aufzeichnens und Speicherns von gesammelten Daten, beinhaltend die GPS-Koordinaten des Wasserfahrzeugs und die Zeit und das Datum, zu der bzw. dem das Ventil geöffnet/geschlossen wird, und die Menge (das Volumen) von Abfall, der ausgetragen wird.

## Revendications

1. Un système de surveillance d'évacuation de déchets (100) comprenant un contrôleur d'évacuation de déchets (400) avec un dispositif inviolable comprenant : une vanne (10), une alimentation électrique (410), un débitmètre conçu pour détecter et mesurer les déchets passant par la vanne, un capteur (11) et un enregistreur (300) qui est conçu pour recevoir un signal GPS et pour enregistrer les coordonnées GPS lors de la réception d'un signal (90) provenant du capteur (11), le capteur (11) est agencé pour détecter l'ouverture / la fermeture de la vanne (10) et pour transmettre un signal (90) à l'enregistreur (300) pour consigner quand la vanne (10) est ouverte / fermée, l'enregistreur (300) est conçu pour enregistrer le signal (90) indiquant l'ouverture / la fermeture de la vanne, de telle sorte que les coordonnées GPS du bateau, dans lequel le contrôleur d'évacuation de déchets (400) est installé, correspondant à l'emplacement où la vanne (10) est ouverte / fermée, sont enregistrées ; dans lequel l'enregistreur (300) inclut un dispositif de mémorisation (420) conçu pour enregistrer et stocker des données collectées incluant les coordonnées GPS du bateau et l'heure et la date à laquelle la vanne (10) est ouverte / fermée et la quantité (volume) de déchets qui est déchargée par la vanne (10), telle que détectée et mesurée par le débitmètre.

2. Un système de surveillance d'évacuation de déchets (100) comprenant un contrôleur d'évacuation de déchets (400) avec un dispositif inviolable comprenant : une vanne (10), une alimentation électrique (410), un débitmètre conçu pour détecter et mesurer les déchets passant par la vanne, un capteur (11) et un enregistreur (300) qui est conçu pour recevoir des coordonnées GPS et pour enregistrer les coordonnées GPS lors de la réception par le capteur (11), le capteur (11) est agencé pour détecter l'ouverture / la fermeture de la vanne (10) et pour transmettre un signal (90) à l'enregistreur (300) pour consigner quand la vanne (10) est ouverte / fermée, l'enregistreur (300) est conçu pour recevoir des coordonnées GPS, fourni par un équipement sur un bateau dans lequel le contrôleur d'évacuation de déchets (400) est installé, et l'enregistreur (300) est conçu pour enregistrer le signal (90) indiquant l'ouverture / la fermeture de la vanne, de telle sorte que les coordonnées GPS du bateau, correspondant à l'emplacement où la vanne (10) est ouverte / fermée, sont enregistrées ; dans lequel l'enregistreur (300) inclut un dispositif de mémorisation (420) conçu pour stocker des données collectées incluant les coordonnées GPS du bateau et l'heure et la date à laquelle la vanne (10) est ouverte / fermée et la quantité (volume) de déchets qui est déchargée par la vanne (10), telle que détectée et mesurée par le débitmètre.

3. Un système de surveillance d'évacuation de déchets (100) selon la revendication 1 ou 2, dans lequel l'enregistreur (300) est situé à distance de la vanne (10).

4. Un système de surveillance d'évacuation de déchets (100) selon l'une quelconque des revendications précédentes, dans lequel la vanne (10) est conçue pour une communication sans fil avec l'enregistreur (300) au moyen d'au moins un émetteur qui est en communication avec le capteur (11), et d'un récepteur (440) qui est en communication avec l'enregistreur (300).

5. Un système de surveillance d'évacuation de déchets (100) selon l'une quelconque des revendications précédentes, dans lequel les coordonnées GPS sont comparées à d'autres données afin d'identifier des zones où l'évacuation de déchets est permise et/ou interdite et un dispositif fournit un signal indiquant si l'évacuation de déchets est permise et/ou interdite à un emplacement spécifique.

6. Un système de surveillance d'évacuation de déchets (100) selon l'une quelconque des revendications précédentes est conçu pour être accouplé fonctionnellement à un système d'identification automatique (AIS) pour évaluer le nombre, le type et la proximité d'autres bateaux dans un rayon prédéterminé du bateau dans lequel le contrôleur (400) est installé et pour fournir un signal de dérogation qui interdit l'ouverture d'une vanne automatique.

7. Un système de surveillance d'évacuation de déchets (100) selon l'une quelconque des revendications précédentes est conçu pour être accouplé fonctionnellement à un dispositif de RADAR pour analyser les objets environnants et pour fournir un signal de dérogation qui interdit l'ouverture d'une vanne automatique.

8. Un système de surveillance d'évacuation de déchets (100) selon l'une quelconque des revendications précédentes incluant un dispositif de capteur pour détecter une quantité de déchets qui est stockée dans un réservoir de stockage (30) et pour fournir un signal de sortie indiquant la quantité de déchets stockés.

9. Un contrôleur d'évacuation de déchets (100) selon la revendication 8 incluant un dispositif qui, lors de l'utilisation, détecte la profondeur de l'eau sous le bateau sur lequel le contrôleur d'évacuation de déchets (400) est installé.

10. Un système de surveillance d'évacuation de déchets (100) selon l'une quelconque des revendications précédentes, incluant le contrôleur (400) lorsqu'il est agencé adjacent à la coque (500) d'un bateau et un émetteur pour une communication sans fil de courte portée par un lecteur (520) afin de transmettre des données stockées dans l'enregistreur (300).

11. Un système de surveillance d'évacuation de déchets (100) selon la revendication 10, dans lequel l'émetteur inclut un coupleur capacitif.

12. Un bateau, incluant le système de surveillance d'évacuation de déchets (100) selon la revendication 10 ou 11.

13. Un procédé de surveillance d'évacuation de déchets utilisant le système de surveillance d'évacuation de déchets (100) selon l'une quelconque des revendications précédentes ayant les étapes d'ouverture / de fermeture de la vanne et d'enregistrement et de stockage des données collectées incluant les coordonnées GPS du bateau et l'heure et la date à laquelle la vanne est ouverte / fermée et la quantité (volume) de déchets qui est déchargée.
